# EUROPÄISCHE PATENTSCHRIFT

(11) **EP 2 566 642 B1**
(45) Veröffentlichungstag und Bekanntmachung des Hinweises auf die Patenterteilung: **18.12.2013**
(21) Anmeldenummer: 11723299.1
(22) Anmeldetag: 04.05.2011
(51) Int. Cl.: B23B 31/02, B23Q 11/10

(54) **WERKZEUGAUFNAHME**
TOOL HOLDER
LOGEMENT D'OUTIL

(30) Priorität: 04.05.2010 DE 102010028561
(43) Veröffentlichungstag der Anmeldung: 13.03.2013
(73) Patentinhaber: Helmut Diebold GmbH&Co. Goldring-Werkzeugfabrik, 72417 Jungingen (DE)
(72) Erfinder: DIEBOLD, Hermann, 72417 Jungingen (DE)
(74) Vertreter: Pfiz, Thomas
(86) Internationale Anmeldenummer: PCT/EP2011/057110
(87) Internationale Veröffentlichungsnummer: WO 2011/138360

(56) Entgegenhaltungen:
- DE-A1-102004 019 869
- US-A- 4 213 354
- US-A1- 2004 013 480

## Beschreibung

Die Erfindung betrifft eine Werkzeugaufnahme gemäß dem Oberbegriff des Anspruchs 1 mit einem rotierend antreibbaren Spannfutter zum Einspannen eines Rotationswerkzeugs, insbesondere eines Bohrers oder Fräsers, und einer Düsenvorrichtung zum Beaufschlagen des Rotationswerkzeugs mit einem flüssigen und/oder gasförmigen Medium. Eine solche Werkzeugaufnahme ist aus Dokument US 2004/0013480 A1 bekannt.

Aus der EP-A 1984144 ist eine Werkzeugmaschine bekannt, die mit verschiedenen Werkzeugaufnahmen und zugehörigen Düsenvorrichtungen bestückbar ist, wobei die einander paarweise zugeordneten Werkzeugaufnahmen und Düsenvorrichtungen lose zusammengefügt sind, so dass die Werkzeugaufnahme rotierbar ist, während die Düsenvorrichtung einen nicht rotierenden Düsenkörper aufweist, der einen kegelstumpfförmigen Werkzeughalter konzentrisch umschließt. Die gegenseitige Positionierung muss dabei so genau sein, dass keine Kollision auftreten kann. Die bekannte Düsenvorrichtung umfasst weiterhin eine Verteilerplatte zur Medienzuführung, die jedoch den Arbeitsraum einschränkt und in der Kinematik berücksichtigt werden muss. Zudem ist eine aufwändige Handhabungseinheit für einen Werkzeugwechsel erforderlich. Als weiterer Nachteil kommt hinzu, dass das bekannte System auf Vollschaftkegel-Werkzeugaufnahmen eingeschränkt ist, wohingegen für Steilkegelverbindungen kein ausreichender Platz zum Andocken des Medienverteilers zur Verfügung steht. Ein weiterer schwerwiegender Nachteil besteht darin, dass der vorgesehene hohlwandige Düsenkörper nur aufwändig herstellbar ist.

Ausgehend hiervon liegt der Erfindung die Aufgabe zugrunde, die im Stand der Technik bekannten Vorrichtungen weiter zu verbessern und mit einfachen Maßnahmen einen genauen und effizienten Sprühstrahl eines Fluids auf das Werkzeug bzw. dessen Arbeitsbereich zu ermöglichen, ohne dass aufwändige Maschinenveränderungen oder Einschränkungen des Arbeitsraums in Kauf zu nehmen wären.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Dementsprechend wird erfindungsgemäß vorgeschlagen, dass die Düsenvorrichtung eine fest mit dem Spannfutter verbindbare und mit diesem mitrotierbare Düsenhülse aufweist, und dass die Innenwand der Düsenhülse gegenüber dem Spannfutter einen Ringkanal zum Durchleiten des Mediums begrenzt. Dadurch wird ein vergleichsweise einfaches Bauteil geschaffen, welches vollwandig ausgeführt werden kann und dennoch eine Medienführung längs des Werkzeughalters ermöglicht, wobei ein Standardwerkzeugkegel ohne zusätzliche Andockplatte eingesetzt werden kann. Speziell kann auch bei sehr dünnschaftigen Werkzeugen gezielt Fluid zugeführt werden, und thermische Zyklen insbesondere bei Schrumpffuttern haben keinen nachteiligen Einfluss auf die Medienführung. Ein weiterer Vorteil ergibt sich dadurch, dass das unter hohem Druck von beispielsweise 80 bar stehende Medium, welches den Werkzeugschaft umgibt, schwingungsdämpfend wirkt. Die Schwingungen werden durch das rotierende Werkzeug beim Bearbeitungsvorgang in die Aufnahme übertragen und dort durch das Fluidpolster abgedämpft.

Vorteilhafterweise weist das Spannfutter einen Axialdurchbruch zum vorderseitigen Einsetzen des Rotationswerkzeugs und mindestens einen von dem Axialdurchbruch abzweigenden und in den Ringkanal mündenden Querkanal zum rückseitigen Zuführen des Mediums auf. Eine axiale Kühlmittelzuführung ist herkömmlich häufig schon vorgesehen, um Kühlmittelkanäle im Werkzeug selbst zu beaufschlagen. Bei der vorliegenden Querausleitung kann der axiale Durchgang durch das Werkzeug selbst blockiert werden.

Eine besonders einfache Möglichkeit zur Schaffung eines Fließpfades besteht darin, dass das Spannfutter eine den Ringkanal radial nach innen begrenzende, insbesondere konische Umfangsfläche aufweist.

Erfindungsgemäß weist die Düsenhülse an ihrem dem Rotationswerkzeug zugewandten Stirnende einen den Ringkanal axial begrenzenden, mit Düsenbohrungen versehenen Düsenring auf, wobei die Düsenbohrungen eintrittseitig zu dem Ringkanal offen sind und austrittseitig auf das Rotationswerkzeug gerichtet sind. Dadurch lässt sich Mediumstrahl genau an die Arbeitsstelle richten, beispielsweise um zu Kühlen oder zu Schmieren und so die Standzeit zu verbessern, oder um Späne direkt nach dem Bruch wegzublasen, so dass optimale Bearbeitungsflächen erhalten werden.

Vorteilhafterweise sind die über den Umfang des Düsenrings verteilten Düsenbohrungen unter einem spitzen Anstellwinkel gegen die Achse des Düsenrings geneigt, um einen Sprühkranz zu bilden. Zur Anpassung der Sprühweiten beispielsweise an unterschiedliche Werkzeuglängen ist es vorteilhaft, wenn mehrere Gruppen von über den Umfang des Düsenrings verteilten Düsenbohrungen unter gruppenweise unterschiedlichem Anstellwinkel gegen die Achse des Düsenrings geneigt sind.

Um einen hinreichenden Staudruck und entsprechend gezielte Sprühstrahlen zu erhalten, ist es von Vorteil, wenn die Düsenbohrungen einen Austrittsdurchmesser von weniger als 1 mm, vorzugsweise etwa 0,5 mm aufweisen.

Vorteilhafterweise ist die Düsenhülse an ihrem dem Rotationswerkzeug zugewandten Stirnende axial begrenzt beweglich gelagert, so dass sich dort Loslager ergibt. Günstig ist es hierbei, wenn der Düsenring durch eine Dichtung, insbesondere einen O-Ring gegenüber der Außenwand des Spannfutters abgedichtet ist. Eine solche Dichtung ermöglicht zugleich eine schwimmende Halterung.

Erfindungsgemäß aufweist die Düsenhülse an ihrem von dem Rotationswerkzeug abgewandten rückseitigen Endabschnitt ein Innengewinde zum Aufschrauben auf das Spannfutter. Eine weitere Handhabungsverbesserung lässt sich dadurch erreichen, dass die Düsenhülse an ihrem rückseitigen Endabschnitt eine mehrkantförmige Außenkontur aufweist.

Eine weitere vorteilhafter Ausgestaltung sieht vor, dass das Spannfutter als Schrumpffutter, Spannzangenfutter, Weldonfutter, Hydrodenspannfutter oder Kraftspannfutter ausgebildet ist.

Vorteilhafterweise besteht die Düsenhülse aus einem Leichtmetall, insbesondere einer Aluminiumlegierung, so dass eine Unwucht reduziert wird und die Fertigung bzw. Bearbeitung vereinfacht wird. Um beim Einsatz eines Schrumpffutters ein Induktionsschrumpfen ohne vorherige Abnahme der Düsenhülse zu ermöglichen, ist es vorteilhaft, wenn die Düsenhülse aus einem magnetisch nicht abschirmenden Werkstoff, insbesondere aus hochtemperaturfestem Kunststoff oder Keramik besteht.

Im Folgenden wird die Erfindung anhand eines in der Zeichnung schematisch dargestellten Ausführungsbeispiels näher erläutert. Es zeigen:
- Fig. 1: eine Werkzeugaufnahme mit Schrumpffutter und darauf aufgesetzter Düsenhülse in perspektivischer Darstellung;
- Fig. 2: einen Axialschnitt durch die Werkzeugaufnahme und die davon abgenommene Düsenhülse;
- Fig. 3: einen Axialschnitt der Werkzeugaufnahme gemäß Fig. 1;
- Fig. 4: eine Ausschnittsvergrößerung der Fig. 3 im Bereich der Düsenhülse.

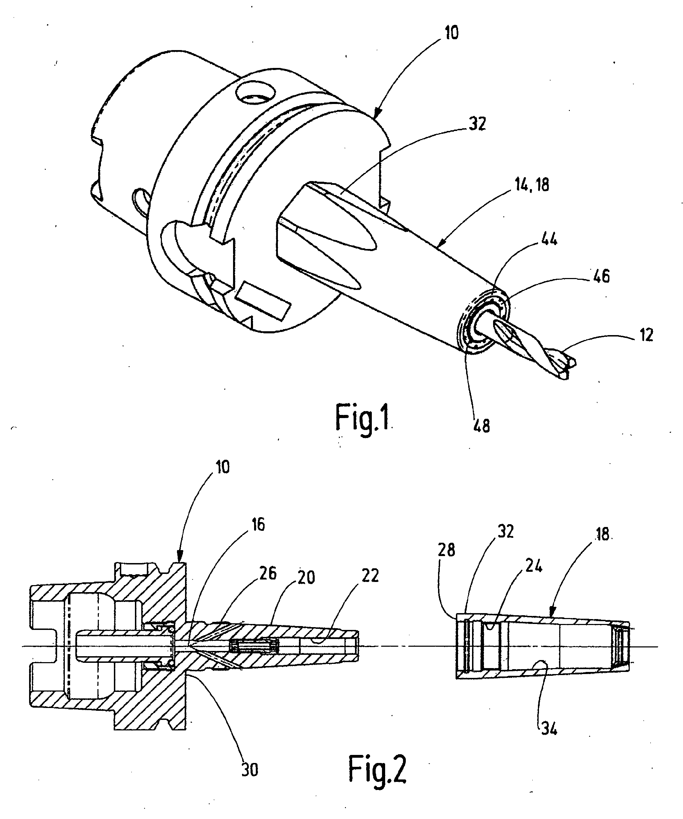

Die in Fig. 1 schaubildlich dargestellte Werkzeugaufnahme besteht im Wesentlichen aus einem an eine Maschinenspindel andockbaren Schrumpffutter 10 zum thermischen Einspannen eines Rotationswerkzeugs 12 und einer Düsenvorrichtung 14 zum Eindüsen eines flüssigen und/oder gasförmigen Mediums insbesondere zum Kühlen, Schmieren und Freiräumen des Arbeitsbereichs des Werkzeugs 12.

Wie am besten aus Fig. 2 ersichtlich, umfasst die Düsenvorrichtung 14 eine innere Medienzuführung 16 in dem Schrumpffutter 10 und eine Düsenhülse 18 zum Aufschrauben auf den konischen Futterkörper 20 des Schrumpffutters. Der Futterkörper 20 besitzt einen als Stufenbohrung ausgeführten axialen Durchbruch 22, der an seinem vorderen Abschnitt gegenüber dem Schaftdurchmesser des insbesondere als Bohrer oder Fräser ausgebildeten Werkzeugs 12 kleiner dimensioniert ist, so dass dieses durch einseitiges Erwärmen des Futterkörpers 20 klemmend einspannbar bzw. herausnehmbar ist.

Nach dem Einspannen des Werkzeugs lässt sich die Düsenhülse 18 durch axiales Aufstecken und Anschrauben in eine mit dem Futterkörper 20 mitrotierbare drehfeste Verbindungsstellung bringen. Zu diesem Zweck hat die Düsenhülse in einem rückseitigen Abschnitt ein Innengewinde 24, das auf einen korrespondierenden Außengewindeabschnitt 26 des Futterkörpers 20 aufschraubbar ist, bis die rückseitige Hülsenstirnfläche 28 an die Planfläche 30 des Schrumpffutters 10 anschlägt. Um das Auf- und Abschrauben zu Erleichtern, weist der rückseitige Endabschnitt der Düsenhülse 18 eine Mehrkantkontur 32 auf.

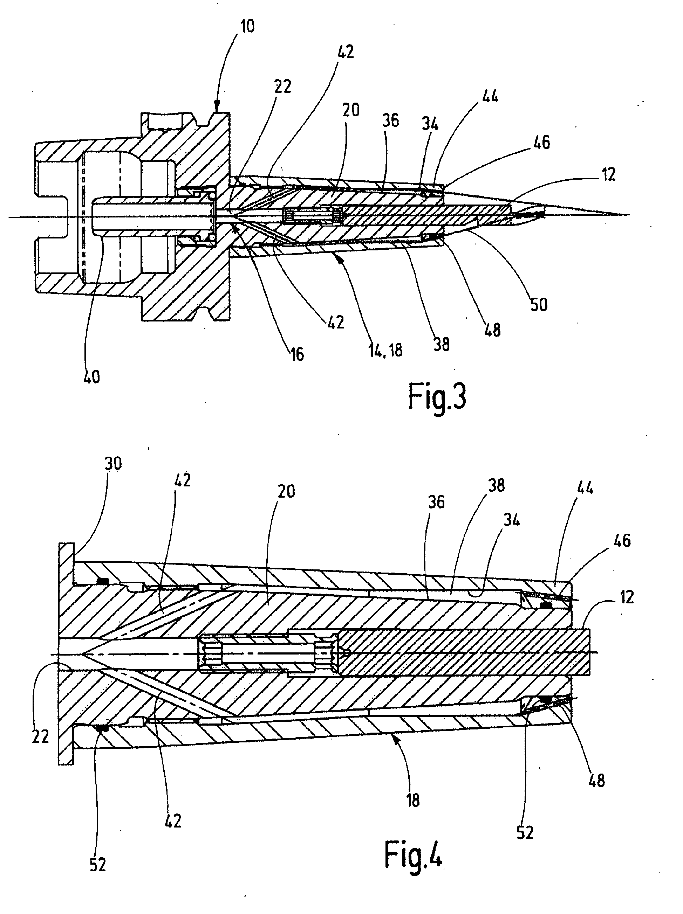

Wie in Fig. 3 und 4 gezeigt, begrenzt die Düsenhülse 18 mit ihrer Innenwand 34 gegenüber dem konischen Mantel 36 des Futterkörpers 20 einen Ringkanal 38 zum Durchleiten des über die Medienzuführung 16 eingespeisten Mediums bzw. Fluids. Hierfür weist die Medienzuführung ein in das Schrumpffutter 10 eingesetztes Übergaberohr 40 zum Anschluss einer maschinenseitigen Medienversorgung und zwei über den axialen Futterdurchbruch 22 mit dem Übergaberohr 40 kommunizierende und in den Ringkanal 38 mündende, einander diametral gegenüberliegende Querkanäle 42 auf.

An ihrem dem Rotationswerkzeug 12 zugewandten Stirnende umfasst die Düsenhülse 18 einen den Ringkanal 38 axial begrenzenden Düsenring 44. auf. Dieser ist mit einer Mehrzahl von Düsenbohrungen 46, 48 versehen, welche eintrittseitig zu dem Ringkanal 38 offen sind und austrittseitig auf das Rotationswerkzeug 12 gerichtet sind. Die Düsenbohrungen 46, 48 sind unter einem spitzen Winkel gegen die Achse des Düsenrings 44 bzw. die Werkzeugschaftachse geneigt, so dass die erzeugten Sprühstrahlen 50 auf den Arbeitsort bzw. auf das Arbeitsende des Werkzeugs 12 auftreffen.

Um unterschiedliche Werkzeuglängen zu berücksichtigen, können die Düsenbohrungen 46, 48 unterschiedliche Anstellwinkel aufweisen. Wie auch aus Fig. 1 ersichtlich, sind eine erste Gruppe von flach angestellten Bohrungen 46 beispielsweise mit einem Anstellwinkel von 7,5° und eine zweite Gruppe von steileren Bohrungen 48 beispielsweise mit einem Anstellwinkel von 15° über den Umfang des Düsenrings 44 verteilt angeordnet.

Die Abmessungen der Düsenbohrungen 46, 48 können an das durchzuleitende Medium angepasst sein; beispielsweise kann nur Luft oder auch ein Flüssig-Luft-Gemisch durchgeleitet werden. Um das Medium mit hoher Strömungsgeschwindigkeit auszustoßen, sollten die Düsenbohrungen einen Austrittsdurchmesser von weniger als 1 mm, vorzugsweise etwa 0,5 mm aufweisen.

Die Düsenhülse 18 ist an ihren Endabschnitten jeweils durch einen O-Ring 52 gegenüber dem Futterkörper 20 abgedichtet. Auf diese Weise kann in dem Ringkanal 38 der erforderliche Druck aufgebaut werden, um das Medium durch die feinen Düsen 46, 48 auszustoßen. Überraschend hat sich gezeigt, dass auch bei hohen Drehzahlen keine wesentliche Strahlaufweitung durch Fliehkraft auftritt. Dies lässt sich dadurch erklären, dass durch den zentralen Werkzeugschaft gegenüber dem Kranz aus Sprühstrahlen aus den Düsen ein Innenraum begrenzt wird, in dem aufgrund der Strömung ein Unterdruck entsteht.

## Patentansprüche

1. Werkzeugaufnahme mit einem rotierend antreibbaren Spannfutter (10) zum Einspannen eines Rotationswerkzeugs (12), insbesondere eines Bohrers oder Fräsers, und einer Düsenvorrichtung (14) zum Beaufschlagen des Rotationswerkzeugs (12) mit einem flüssigen und/oder gasförmigen Medium, **dadurch gekennzeichnet, dass** die Düsenvorrichtung (14) eine fest mit dem Spannfutter (10) verbindbare und mit diesem mitrotierbare Düsenhülse (18) aufweist, wobei die Düsenhülse (18) an ihrem von dem Rotationswerkzeug (12) abgewandten rückseitigen Endabschnitt ein Innengewinde (24) zum Aufschrauben auf das Spannfutter (10) aufweist, und dass die Innenwand (34) der Düsenhülse (18) gegenüber dem Spannfutter (10) einen Ringkanal (38) zum Durchleiten des Mediums begrenzt, wobei die Düsenhülse (18) an ihrem dem Rotationswerkzeug (12) zugewandten Stirnende einen den Ringkanal (38) axial begrenzenden, mit Düsenbohrungen (46,48) versehenen Düsenring (44) aufweist und die Düsenbohrungen (46,48) eintrittseitig zu dem Ringkanal (38) offen sind und austrittseitig auf das Rotationswerkzeug (12) gerichtet sind.

2. Werkzeugaufnahme nach Anspruch 1, **dadurch gekennzeichnet, dass** das Spannfutter (10) einen Axialdurchbruch (22) zum vorderseitigen Einsetzen des Rotationswerkzeugs (12) und mindestens einen von dem Axialdurchbruch (22) abzweigenden und in den Ringkanal (38) mündenden Querkanal (42) zum rückseitigen Zuführen des Mediums aufweist.

3. Werkzeugaufnahme nach Anspruch 1 oder 2, **dadurch gekennzeichnet, dass** das Spannfutter (10) eine den Ringkanal (38) radial nach innen begrenzende, insbesondere konische Umfangsfläche (36) aufweist.

4. Werkzeugaufnahme nach einem der Ansprüche 1 bis 3, **dadurch gekennzeichnet, dass** die über den Umfang des Düsenrings (44) verteilten Düsenbohrungen (46,48) unter einem spitzen Anstellwinkel gegen die Achse des Düsenrings (44) geneigt sind.

5. Werkzeugaufnahme nach einem der Ansprüche 1 bis 4, **dadurch gekennzeichnet, dass** mehrere Gruppen von über den Umfang des Düsenrings (44) verteilten Düsenbohrungen (46,48) unter gruppenweise unterschiedlichem Anstellwinkel gegen die Achse des Düsenrings (44) geneigt sind.

6. Werkzeugaufnahme nach einem der Ansprüche 1 bis 5, **dadurch gekennzeichnet, dass** die Düsenbohrungen (46,48) einen Austrittsdurchmesser von weniger als 1 mm, vorzugsweise etwa 0,5 mm aufweisen.

7. Werkzeugaufnahme nach einem der Ansprüche 1 bis 6, **dadurch gekennzeichnet, dass** die Düsenhülse (18) an ihrem dem Rotationswerkzeug (12) zugewandten Stirnende axial begrenzt beweglich gelagert ist.

8. Werkzeugaufnahme nach einem der Ansprüche 1 bis 7, **dadurch gekennzeichnet, dass** der Düsenring (44) durch eine Dichtung (52), insbesondere einen O-ring gegenüber der Außenwand des Spannfutters (10) abgedichtet ist.

9. Werkzeugaufnahme nach einem der Ansprüche 1 bis 8, **dadurch gekennzeichnet, dass** die Düsenhülse (18) an ihrem rückseitigen Endabschnitt eine mehrkantförmige Außenkontur (32) aufweist.

10. Werkzeugaufnahme nach einem der Ansprüche 1 bis 9, **dadurch gekennzeichnet, dass** das Spannfutter (10) als Schrumpffutter, Spannzangenfutter, Weldonfutter, Hydrodenspannfutter oder Kraftspannfutter ausgebildet ist.

11. Werkzeugaufnahme nach einem der Ansprüche 1 bis 10, **dadurch gekennzeichnet, dass** die Düsenhülse (18) aus einem magnetisch nicht abschirmenden Werkstoff, insbesondere aus Kunststoff oder Keramik besteht.

## Claims

1. Tool receptacle having a rotationally driveable chuck (10) for clamping in a rotary tool (12), in particular a drill bit or milling tool, and a nozzle device (14) for applying a liquid and/or gaseous medium to the rotary tool (12), **characterized in that** the nozzle device (14) has a nozzle sleeve (18) that is connectable firmly to the chuck (10) and is able to rotate together with the latter, wherein the nozzle sleeve (18) has, on its rear end portion remote from the rotary tool (12), an internal thread (24) for screwing onto the chuck (10), and **in that** the inner wall (34) of the nozzle sleeve (18) opposite the chuck (10) bounds an annular channel (38) for guiding through the medium, wherein the nozzle sleeve (18) has, on its end side facing the rotary tool (12), a nozzle ring (44) that axially bounds the annular channel (38) and is provided with nozzle bores (46, 48), and the nozzle bores (46, 48) are open towards the annular channel (38) on the inlet side and are directed towards the rotary tool (12) on the outlet side.

2. Tool receptacle according to Claim 1, **characterized in that** the chuck (10) has an axial aperture (22) for inserting the rotary tool (12) on the front side, and at least one transverse channel (42), which branches off from the axial aperture (22) and leads into the annular channel (38), for feeding the medium on the rear side.

3. Tool receptacle according to Claim 1 or 2, **characterized in that** the chuck (10) has an in particular conical circumferential surface (36) that bounds the annular channel (38) radially towards the inside.

4. Tool receptacle according to one of Claims 1 to 3, **characterized in that** the nozzle bores (46, 48), which are distributed around the circumference of the nozzle ring (44), are inclined at an acute setting angle with respect to the axis of the nozzle ring (44).

5. Tool receptacle according to one of Claims 1 to 4, **characterized in that** a plurality of groups of nozzle bores (46, 48), which are distributed around the circumference of the nozzle ring (44), are inclined in groups at different setting angles with respect to the axis of the nozzle ring (44).

6. Tool receptacle according to one of Claims 1 to 5, **characterized in that** the nozzle bores (46, 48) have an outlet diameter of less than 1 mm, preferably around 0.5 mm.

7. Tool receptacle according to one of Claims 1 to 6, **characterized in that** the nozzle sleeve (18) is mounted so as to be movable in an axially limited manner at its end side facing the rotary tool (12).

8. Tool receptacle according to one of Claims 1 to 7, **characterized in that** the nozzle ring (44) is sealed off from the outer wall of the chuck (10) by a seal (52), in particular an 0-ring.

9. Tool receptacle according to one of Claims 1 to 8, **characterized in that** the nozzle sleeve (18) has a polygonal external contour (32) in its rear end portion.

10. Tool receptacle according to one of Claims 1 to 9, **characterized in that** the chuck (10) is configured as a shrink fit chuck, collet chuck, Weldon chuck, hydraulic expansion chuck or power chuck.

11. Tool receptacle according to one of Claims 1 to 10, **characterized in that** the nozzle sleeve (18) consists of a magnetically non-shielding material, in particular of plastics material or ceramic.

## Revendications

1. Porte-outil comprenant un mandrin de serrage (10) pouvant être entraîné en rotation destiné à serrer un outil rotatif (12), en particulier une perceuse ou une fraiseuse, et un dispositif à buse (14) pour solliciter l'outil rotatif (12) avec un milieu liquide et/ou gazeux, **caractérisé en ce que** le dispositif à buse (14) présente une douille de buse (18) pouvant être connectée fixement au mandrin de serrage (10) et pouvant tourner avec celui-ci, la douille à buse (18) présentant, au niveau de sa portion d'extrémité arrière opposée à l'outil rotatif (12), un filetage interne (24) pour le vissage sur le mandrin de serrage (10), et **en ce que** la paroi interne (34) de la douille à buse (18) délimite par rapport au mandrin de serrage (10) un canal annulaire (38) pour le passage du milieu, la douille à buse (18) présentant, au niveau de son extrémité frontale tournée vers l'outil rotatif (12), une bague de buse (44) délimitant axialement le canal annulaire (38), pourvue d'alésages de buse (46, 48), et les alésages de buse (46, 48) étant ouverts du côté de l'entrée vers le canal annulaire (38) et étant orientés du côté de la sortie vers l'outil rotatif (12).

2. Porte-outil selon la revendication 1, **caractérisé en ce que** le mandrin de serrage (10) présente un orifice axial (22) pour l'insertion du côté avant de l'outil rotatif (12) et au moins un canal transversal (42) partant de l'orifice axial (22) et débouchant dans le canal annulaire (38) pour l'alimentation du milieu du côté arrière.

3. Porte-outil selon la revendication 1 ou 2, **caractérisé en ce que** le mandrin de serrage (10) présente une surface périphérique (36), en particulier conique, délimitant radialement vers l'intérieur le canal annulaire (38).

4. Porte-outil selon l'une quelconque des revendications 1 à 3, **caractérisé en ce que** les alésages de buse (46, 48) répartis sur la périphérie de la bague de buse (44) sont inclinés suivant un angle d'attaque aigu par rapport à l'axe de la bague de buse (44).

5. Porte-outil selon l'une quelconque des revendications 1 à 4, **caractérisé en ce que** plusieurs groupes d'alésages de buse (46, 48) répartis sur la périphérie de la bague de buse (44) sont inclinés suivant des angles d'attaque différents par groupes par rapport à l'axe de la bague de buse (44).

6. Porte-outil selon l'une quelconque des revendications 1 à 5, **caractérisé en ce que** les alésages de buse (46, 48) présentent un diamètre de sortie inférieur à 1 mm, de préférence d'environ 0,5 mm.

7. Porte-outil selon l'une quelconque des revendications 1 à 6, **caractérisé en ce que** la douille de buse (18) est montée de manière déplaçable de manière limitée axialement au niveau de son extrémité frontale tournée vers l'outil rotatif (12).

8. Porte-outil selon l'une quelconque des revendications 1 à 7, **caractérisé en ce que** la bague de buse (44) est scellée hermétiquement par une garniture d'étanchéité (52), en particulier un joint torique, par rapport à la paroi extérieure du mandrin de serrage (10).

9. Porte-outil selon l'une quelconque des revendications 1 à 8, **caractérisé en ce que** la douille de buse (18) présente, au niveau de sa portion d'extrémité arrière, un contour extérieur (32) de forme polygonale.

10. Porte-outil selon l'une quelconque des revendications 1 à 9, **caractérisé en ce que** le mandrin de serrage (10) est réalisé sous forme de mandrin de frettage, de mandrin à pince de serrage, de mandrin Weldon, de mandrin hydraulique ou de mandrin de serrage haute performance.

11. Porte-outil selon l'une quelconque des revendications 1 à 10, **caractérisé en ce que** la douille de buse (18) se compose d'un matériau sans effet de blindage magnétique, en particulier de plastique ou de céramique.
